(19) Europäisches Patentamt
European Patent Office
Office européen des brevets

(11) Publication number: **0 567 084 A1**

(12) **EUROPEAN PATENT APPLICATION**

(21) Application number: 93106408.3

(22) Date of filing: 20.04.93

(51) Int. Cl.5: **G11B 5/704**, G11B 5/64

(30) Priority: **21.04.92 JP 101327/92**

(43) Date of publication of application:
**27.10.93 Bulletin 93/43**

(84) Designated Contracting States:
**DE FR GB IT LU NL**

(71) Applicant: **DIAFOIL HOECHST CO., LTD**
**28-10, Hongo 1-chome**
**Bunkyo-ku Tokyo(JP)**

(72) Inventor: **Utsumi, Shigeo**
**1786-1, Shimotsuruma**
**Yamato-shi, Kanagawa-ken(JP)**
Inventor: **Inagaki, Masashi**
**919-6, Nagatake,**
**Tsukui-machi**
**Tsukui-gun, Kanagawa-ken(JP)**
Inventor: **Watanuki, Yuko**
**Machidakoputaun 19-406, 1-13-6, Ogawa**
**Machida-shi, Tokyo-to(JP)**

(74) Representative: **TER MEER - MÜLLER -**
**STEINMEISTER & PARTNER**
**Mauerkircherstrasse 45**
**D-81679 München (DE)**

(54) **Polyester film for high density magnetic recording tape.**

(57) A polyester film having a polyester (A) layer and at least one polyester (B) layer of at most 2.5 $\mu$m in thickness containing at least 2.0 % by weight of particles and laminated on at least one surfaces of the polyester (A) layer, wherein a center line average roughness of a polyester (A) layer surface ($Ra^A$), a center line average roughness of a polyester (B) layer surface ($Ra^B$), a light transmittance of 900 nm wave length light ($T_{900}$) and the peak count number on the polyester (B) layer surface are specified values, has excellent light screen property and surface property for a high density magnetic recording tape.

## BACKGROUND OF THE INVENTION

### Field of the invention

The present invention relates to a polyester film for a high density magnetic recording tape.

### Description of related art

Recently, a high grade type videotape is preferred to a standard type videotape; as videotapes are spread. In the high grade type videotape, a higher picture quality is intended by the improvement of magnetic powder or the decrease of the carbon black amount in a binder of a magnetic layer. However, by such procedures, the light screen property of the videotape decreases so that the videotape cannot be used in a video deck detecting an end of the magnetic tape by the light transmittance.

As a technique for improving the above problems, the following procedures are proposed: (1) Light screen particles are added to the film (Japanese Patent Kokai Publication 43931/1988; (2) A carbon black-containing layer is laminated on a film (Japanese Patent Kokai Publication Nos. 93103/1975 and 83841/1981). However, such procedures are insufficient since the surface state of the film is deteriorated or a foreign substance, so-called fish eye (FE) is generated.

## SUMMERY OF THE INVENTION

An object of the present invention is provide a base film suitable for a high density magnetic recording tape having good properties.

This and other objects of the present invention are achieved by a polyester film for a high density magnetic recording tape comprising a polyester (A) layer and at least one polyester (B) layer of at most 2.5 $\mu$m in thickness containing at least 2.0 % by weight of particles and laminated on at least one surface of the polyester (A) layer, wherein all of the following equations (1) to (4) are satisfied:

$$0.002 \leq Ra^A \leq 0.015 \qquad (1)$$

$$0.010 \leq Ra^B \leq 0.030 \qquad (2)$$

$$T_{900} \leq 55 \qquad (3)$$

$$80 \leq Pc^B \qquad (4)$$

wherein $Ra^A$ is a center line average roughness ($\mu$m) of the surface of the polyester (A) layer,
$Ra^B$ is a center line average roughness ($\mu$m) of the surface. of the polyester (B) layer,
$T_{900}$ is a light transmittance (%) of light of 900 nm in wave length through the film, and
$Pc^B$ is the peak count number (peaks/0.8 mm) on the surface of the polyester (B) layer.

## DETAILED DESCRIPTION OF THE INVENTION

A polyester used for the polyester (A) and (B) layers is a polymer which is prepared by polycondensing an aromatic dicarboxylic acid such as terephthalic acid and naphthalene-2,6-dicarboxylic acid with an aliphatic glycol such as ethylene glycol, diethylene glycol, tetramethylene glycol and neopentyl glycol. Specific examples of the polymer are poly(ethylene terephthalate) (PET) and poly(ethylene 2, 6-naphthalene dicarboxylate) (PEN). In addition to a homopolymer, the polyester used in the present invention may be a copolymer containing an aromatic or aliphatic dicarboxylic acid or diol in such amount, for example at most 10 % by mol, preferably at most 5 % by mol that the crystallinity of the polymer does not decrease.

The polyester (A) and (B) layers may be prepared by blending at most 10 by weight, based on each layer, of other polymer such as a polyamide, a polyolefin and a polycarbonate. It is undesirable for the blending to decrease the crystallinity to a significant extent or roughen the surface to a significant extent.

The polyester (A) layer of the film of the present invention may optionally contain an additive such as particles, an organic lubricant, a colorant, an antioxidant, an antifoaming agent and an antistatic agent. The particles which may be used in the polyester (A) layer for increasing the slipperiness, include inert external particles such as kaolin, clay, calcium carbonate, silicon oxide, spherical silica, calcium terephthalate, aluminum oxide, titanium oxide, calcium phosphate, lithium fluoride and carbon black; and internal particles prepared in the polymer during the polyester preparation, of a high melting point organic compound which is non-meltable during the melt-formation of the polyester resin film, a cross-linked polymer and a metallic compound catalyst (for example, an alkaline metallic compound and an alkaline earth metallic compound) used for the polyester preparation.

The center line average roughness $Ra^A$ of the surface of the polyester (A) layer is from 0.002 to 0.015, preferably 0.004 to 0.012. When $Ra^A$ is smaller than 0.002, the film has undesirably low slipperiness even if the layer (B) has high roughness. When $Ra^A$ is larger than 0.015, the magnetic tape has undesirably deteriorated electrical properties. The particles contained in the polyester (A) layer may usually be inert particles having an average particle size of from 0.007 to 5 $\mu$m, preferably from 0.02 to 1.5 pm. An amount of the particles in the polyester (A) layer is usually from 0.001 to 0.70 % by weight, preferably from 0.1 to 0.50 % by weight based on the polyester (A) layer. Only in the case of carbon black, the particle amount is preferably at most 1.5 % by weight, more preferably at most 1.0 % by weight, most preferably at most 0.8 % by weight.

The polyester (A) layer may contain a reclaimed resin such as a self-recycled resin, or an in-line coating agent-containing resin to such extent that the film surface roughness does not have an adverse effect.

A thickness of the polyester (B) layer is at most 2.5 $\mu$m, preferably from 0.5 to 2.0 $\mu$m. When the thickness is larger than 2.5 $\mu$m, the light screen property and the uniformity of the film surface are deteriorated.

$Ra^B$ of the surface of the polyester (B) layer is from 0.010 to 0.030. When the $Ra^B$ is smaller than 0.010, the film has deteriorated slipperiness. When the $Ra^B$ is larger than 0.030, the magnetic tape has deteriorated electromagnetic conversion property.

The number of coarse protuberances $n_3$ showing the interference fringes of the not less than third orders of the polyester (B) layer surface is preferably at most 10 projections/10 cm$^2$, more preferably 0.

$Pc^B$ of the polyester (B) layer surface is at least 80 peaks/0.8 mm. When $Pc^B$ is smaller than 80 peaks/0.8 mm, the projections have poor uniformity so that the formed magnetic tape have poor electrical properties. $Pc^B$ is preferably at least 100 peaks/0.8 mm, more preferably at least 110 peaks/0.8 mm, most preferably from 110 to 150 peaks/0.8 mm.

The light transmittance of the light having the wave length of 900 nm through the film of the present invention is at most 55 %, preferably at most 35 %. When the light transmittance is larger than 55 %, a tape end of the formed magnetic tape cannot be detected.

In order to give the light screen property, carbon black particles are usually added to the polyester (B). The kind of carbon black is not limited. Lamp black, thermal black, furnace black, acetylene black and the like are preferable. An average particle size of the carbon black particles is not also limited. The average particle size is preferably from 10 to 30 nm, preferably from 10 to 20 nm. When the average particle size is larger than 30 nm, the particles undesirably form a very large aggregate so as to intend to form a large projection on the film surface. When the average particle size is smaller than 10 nm, a surface energy of the particle undesirably increases so as to intend to form a large aggregate.

An addition amount of the carbon black particles in the layer (B) is usually at least 2.0 % by weight, preferably from 2.0 to 20 % by weight, more preferably from 3.0 to 10 % by weight. When the amount is smaller than 2.0 % by weight, the light screen property is insufficient.

A method for adding the carbon black particles to the film is not limited. The carbon black particles may be added during the polymerization, after the completion of the polymerization or during the drying, or incorporated during the extrusion. A preferable method is to prepare a master batch containing a high concentration of the carbon black particles, and to blend the master batch with other raw material of the polyester layer before or after the drying so as to obtain the film containing a desired concentration of the carbon black particles. The concentration of the carbon black particles in the master batch is preferably from 2.0 to 50 % by weight, more preferably from 10 to 30 % by weight. When the concentration of carbon black particles in the master batch is larger than 50 % by weight, it is difficult to prevent the aggregation of the carbon black particles during the preparation of the master batch even if the carbon black particles have good dispersion property. When the concentration in the master batch is smaller than 2.0 % by weight, the content of the master batch is so large that the degree of freedom to blend the other raw material undesirably decreases.

Preferably, after a material for the master batch is filtered in the extrusion process for the master batch preparation, the material for the film is filtered also before the formation of the film. A filter is preferably about 1,000 mesh or finer.

A dispersant is preferably added so as to improve the dispersion property of the carbon black particles in the film. The kind of the dispersant is not limited. Specific examples of a preferable dispersant is a higher fatty acid having at least 16 carbon atoms and/or a derivative thereof, polyvinylpyrrolidone, epoxydized polybutadiene and a sodium salt of sulfonated naphthalene. The addition amount of the dispersant is preferably at most 10,000 ppm, more preferably at most 5,000 ppm.

The carbon black particles give various good properties such as adhesion property and slipperiness. In order to obtain more excellent adhesion property and slipperiness, inert inorganic particles other than carbon black particles may added to the polyester (B) layer.

Specific examples of the inert inorganic particles added to the layer (B) are inert external particles made of a salt or oxide containing at least one element selected from the group consisting of elements of Groups I, II, III, IV and the like of the Periodic Table, such as kaolin, clay, calcium carbonate, silicon oxide, spherical silica, calcium terephthalate, aluminum oxide, titanium oxide and calcium phosphate; and internal particles prepared in the polymer during the polyester preparation, of a high melting point organic compound which is non-meltable during the melt-formation of the polyester resin film, a cross-linked polymer and a metallic compound catalyst (for example, an alkaline metallic compound and an alkaline earth metallic compound) used for the polyester preparation.

An average particle size of the inert inorganic particles added to the layer (B) is not limited. The average particle size is usually from 0.05 to 5 $\mu$m, preferably from 0.1 to 3 $\mu$m. Among the above inert inorganic particles, titanium oxide particles are particularly preferable, since they have good dispersion property with the carbon black particles and the film surface is uniform so that a necessary amount of the carbon black particles is small. The average particle size of the titanium oxide particles is preferably from 0.05 to 3 $\mu$m, more preferably from 0.1 to 1 $\mu$m. An addition amount of the inert inorganic particles is at most 1.0 % by weight, preferably from 0.01 to 0.5 by weight.

In order to further improve the slipperiness of the film, an organic lubricant may be added. A fatty acid, a fatty acid ester, and an aliphatic and/or aromatic alkylene-bis-amide are preferable. Specific example of preferable fatty acid is one having a large number, for example 16 to 33, carbon atoms, such as montanic acid. Specific example of the fatty acid ester is ethylene glycol montanate. Specific examples of the aliphatic and/or aromatic alkylene-bis-amide are hexamethylene-bis-behenamide, hexamethylene-bis-stearylamide and N,N'-distearylterephthalamide. An addition amount of the organic lubricant in the film is not limited, but usually at most 10,000 ppm, preferably at most 5,000 ppm. When the addition amount of the organic lubricant is too large, the adhesion property of a coated or deposited material with the film undesirably decreases.

The film of the present invention may be two-layered film in which the layer (B) is laminated on one surface of the layer (A). Alternatively, the film of the present invention may be at least three-layered film in which the layer (A) is multiple-layered, one of which layers may be a reclaimed resin layer.

A method for preparing the film of the present invention is illustrated with following explanations which do not limit the method for preparing the film. A method for giving the laminated film may be a conventional method such as a coextrusion method, an extrusion lamination method and a dry lamination method. In particular, the coextrusion method is preferable since the thin laminated film can be advantageously formed and the productivity is high. Therefore, the method for preparing the film is illustrated by the coextrusion method.

Each of the polyesters (A) and (B) optionally containing inorganic particles and the like as a lubricant in a desired amount is dried by a dryer such as a hopper dryer, a paddle dryer and a vacuum dryer, and then melted at 200-320°C in an extruder. Then, the polyesters (A) and (B) are joined in a pipe or nozzle to extrude a laminated film having two, three or more layers, and quenched to give an unstretched film.

For the extrusion, a conventional method such as a T-die method and a tubular method can be used. By adjusting a discharge amount from the extruder, a thickness ratio of the layers of the film can be suitably varied. When the T-die method is used for preparing the unstretched film, a film having uniform thickness can be obtained by using an electrostatic pinning method on the quenching. The resultant unstretched film may be stretched at a temperature range between $(Tg^A - 10)$°C and $(Tc^A - 10)$°C (wherein $Tg^A$ is a glass transition temperature (°C) of the polyester (A) and $Tc^A$ is a crystallizing temperature (°C) of the polyester (A)) at draw ratios of at least 2.0 in the machine and transverse directions at the stretching step. The resultant biaxially oriented polyester film may be heat set at 180-240°C.

The above thermal treatment may be usually performed under the tensed and fixed state. Alternatively, the film may be relaxed or stretched at at most 20 % in the machine and/or transverse directions of the film on the thermal treatment and/or the cooling after the thermal treatment.

Before, during or after the stretching step, one or both sides of the film may be subjected to a corona discharge treatment so as to improve an adhesion property of the film to a magnetic coated layer and the like.

Before, during or after the stretching step, a coating may be provided on the film to improve various properties such as an adhesion property, an antistatic property, slipperiness and a light screen property.

Then, the resultant film may be wind up to give a product.

A thickness of the film of the present invention is usually from 3 to 30 $\mu$m, preferably from 5 to 25 $\mu$m, since the film of the present invention is a base film for a magnetic recording tape.

A magnetic layer can be provided on a smooth surface of the film, preferably on the polyester (A) layer by the coating, deposition or spattering.

PREFERRED EMBODIMENT OF THE INVENTION

The present invention is illustrated by following Examples which do not limit the present invention. In the Examples, "part" means "part by weight", unless otherwise specified.

In the Examples, the film was evaluated as follows:

(1) Light transmittance ($T_{900}$)

Using a spectrophotometer (UV-3100S manufactured by Shimadzu), the light transmittance is measured at a light wave length of 900 nm.

(2) Center line average roughness (Ra)

Using a surface roughness tester (SE-3FX manufac-tured by Kosaka Kenkyusho, Ltd.), the center line average roughness Ra is measured according to JIS B-0601-1976, with necessary modifications. The measuring conditions are the use of a contact probe having a tip radius of 2 $\mu$m, 30 mg of probe contact pressure, 0.08 mm of cutoff, and 2.5 mm of a measuring length.

The measurement is performed at 10 points on the film and the surface roughness values are averaged.

(3) Peak count number

Using a surface roughness tester (SE-3F manufac-tured by Kosaka Kenkyusho, Ltd.), the peak count number is measured. The measuring conditions are the use of a contact probe having a tip radius of 2 $\mu$m, 30 mg of probe contact pressure, 0.08 mm of cutoff, 0.8 mm of a measured length, 50,000 x of a height magnification and 100 x of a width magnification. The peak count value is determined as follows. A point at which a roughness curve and a center line of a cross-section curve cross at a positive slope state and a point at which they then cross at a negative slope state are defined as two ends of a peak and then the number of the peaks is counted in the measured length of 0.8 mm.

(4) Film thickness ratio

A thin specimen cut out along the film thickness is prepared by a microtome. The thickness ratio is measured by observing the specimen at 20,000 x of the magnitude using a transmission electron microscope (TEM).

Example 1

Preparation of polyester chips

In a reactor, dimethyl terephthalate (100 parts), ethylene glycol (70 parts) and calcium acetate monohydrate (0.07 parts) were charged. The mixture was heated to conduct a transesterification reaction with removing methanol. The temperature was increased to 230°C over 4.5 hours from the initiation of the reaction to substantially complete the transesterification reaction.

Then, phosphoric acid (0.04 parts) and antimony trioxide (0.035 parts) were added and a polymerization reaction was conducted in the conventional manner. The reaction temperature was gradually increased to 280°C and the pressure was gradually decreased to 0.5 mmHg. The reaction was continued for 4 hours and a product (polyester ($A_1$)) was cut into chips. [$\eta$] of the polyester: 0.65.

The polyester ($A_1$) was mixed with carbon black particles of 15 nm in an average particle size in a biaxial incorporating machine, filtered through a 1000 mesh filter and then cut into chips to prepare a master batch (polyester ($B_1$)) having a carbon black concentration of 10 % by weight. [$\eta$] of the polyester

(B$_1$): 0.60.

Terephthalic acid (87 parts) was reacted with ethylene glycol (42 parts) in the presence of bis-($\beta$-hydroxyethyl) terephthalate oligomer (100 parts) under an atmospheric pressure at 260°C to conduct an esterification reaction. After 4 hours, polyester oligomer having an esterification degree of 97 % was obtained. An ethylene glycol slurry of spherical silica fine particles having an average particle size of 0.3 $\mu$m was added in an amount of 0.35 % by weight based on the polyester. Then, ethyl acid phosphate (0.014 parts), antimony trioxide (0.022 parts) and magnesium acetate (0.086 parts) were added and a polycondensation reaction was conducted for 3 hours and 50 minutes to give a polyester (C$_1$) having an intrinsic viscosity of 0.660.

The same manner as in the preparation of the polyester (C$_1$) was repeated except that $\delta$-alumina particles in an amount of 1.00 % by weight were used instead of spherical silica, to give a polyester (D$_1$).

Preparation of film

The polyester (A$_1$), the polyester (B$_1$) and the polyester (D$_1$) were blended to prepare a raw material (1) having a carbon black amount of 3.6 % by weight and an alumina amount of 0.36 % by weight. The polyester (C$_1$) was used as a raw material (2) and the polyester (A$_1$) was used as a raw material (3). Each of the raw materials (1)-(3) was dried, melted at 287°C in a different extruder, joined in a pipe and quenched to give an unstretched film consisting of three layers (raw material (1)/raw material (3)/raw material (2)). The unstretched film was stretched in a machine direction at a draw ratio of 2.4 at 83°C and at a draw ratio of 1.2 at 95°C, and then in a transverse direction at a draw ratio of 3.7 at 125°C and then heat set at 220°C to give a film of 15 $\mu$m in thickness. Layer thicknesses of the resultant film were 0.5 $\mu$m/13 $\mu$m/1.5 $\mu$m (= raw material (2)/raw material (3)/raw material (1)).

Example 2

The same procedure as in Example 1 was repeated except that an amount of carbon black in the raw material (1) was 5.6 % by weight, to give a film of 15 $\mu$m in thickness.

Comparative Example 1

The same procedure as in Example 1 was repeated except that an amount of carbon black in the raw material (1) was 0.42 % by weight, a thickness of the raw material (1) layer was 13 $\mu$m, a thickness of the raw material (2) layer was 2 $\mu$m and the raw material (3) layer was omitted, to give a film of 15 $\mu$m in thickness.

Comparative Example 2

The same procedure as in Example 1 was repeated except that an amount of carbon black in the raw material (1) was 7.5 % by weight, a thickness of the raw material (1) layer was 2 $\mu$m, a thickness of the raw material (2) layer was 13 $\mu$m and the raw material (3) layer was omitted, to give a film of 15 $\mu$m in thickness.

Comparative Example 3

The same procedure as in Example 1 was repeated except that an amount of carbon black in the raw material (1) was 3.2 % by weight, a thickness of the raw material (1) layer was 5 $\mu$m, a thickness of the raw material (2) layer was 10 $\mu$m and the raw material (3) layer was omitted, to give a film of 15 $\mu$m in thickness.

Properties of the resultant films are shown in Table.

Table

| Example No. | $T_{900}$ (%) | $Ra^A$ | $Ra^B$ | $Pc^B$ |
|---|---|---|---|---|
| 1 | 46 | 0.009 | 0.018 | 112 |
| 2 | 26 | 0.009 | 0.024 | 118 |
| Com. 1 | 52 | 0.012 | 0.008 | 40 |
| Com. 2 | 13 | 0.010 | 0.035 | 78 |
| Com. 3 | 15 | 0.011 | 0.029 | 72 |

Each of these films was used as a base film and a magnetic layer was provided on the base film by a conventional method to give a magnetic tape. The magnetic layer was provided on the raw material (2) layer in Examples 1-2, and Comparative Examples 1-3. The films of Example 1-2 each gave a good magnetic tape. However, the film of Comparative Example 1 gave a magnetic tape having unstable runnability, the film of Comparative Example 2 gave a magnetic tape having deteriorated electrical properties and the film of Comparative Example 3 gave a magnetic tape having increased dropout so that these three magnetic tapes could not used practically.

The film of the present invention has an excellent light screen property and surface property and can be used as a base film for a high density magnetic recording tape.

## Claims

**1.** A polyester film for a high density magnetic recording tape comprising a polyester (A) layer and at least one polyester (B) layer of at most 2.5 $\mu$m in thickness containing at least 2.0 % by weight of particles and laminated on at least one surfaces of the polyester (A) layer, wherein all of the following equations (1) to (4) are satisfied:

$$0.002 \leq Ra^A \leq 0.015 \qquad (1)$$

$$0.010 \leq Ra^B \leq 0.030 \qquad (2)$$

$$T_{900} \leq 55 \qquad (3)$$

$$80 \leq Pc^B \qquad (4)$$

wherein $Ra^A$ is a center line average roughness ($\mu$m) of the surface of the polyester (A) layer,
$Ra^B$ is a center line average roughness ($\mu$m) of the surface of the polyester (B) layer,
$T_{900}$ is a light transmittance (%) of light of 900 nm in wave length through the film, and
$Pc^B$ is the peak count number (peaks/0.8 mm) on the surface of the polyester (B) layer.

**2.** The polyester film according to claim 1, wherein each of the polyester (A) and (B) layers comprises a polymer which is prepared by polycondensing an aromatic dicarboxylic acid with an aliphatic glycol.

**3.** The polyester film according to claim 2, wherein the polymer is poly(ethylene terephthalate) (PET) or poly(ethylene 2,6-naphthalene dicarboxylate) (PEN).

**4.** The polyester film according to claim 1, wherein at least one polyester layer contains inert external particles selected from the group consisting of kaolin, clay, calcium carbonate, silicon dioxide, spheroidal silica, calcium terephthalate, aluminum oxide, titanium oxide, calcium phosphate, lithium fluoride and carbon black.

**5.** The polyester film according to claim 1, wherein at least one polyester layer contains internal particles selected from the group consisting of particles prepared in the polymer during polyester preparation, of a non-meltable high melting point organic compound, a cross-linked polymer and a metallic compound catalyst used for the polyester preparation.

**5.** The polyester film according to claim 1, wherein the polyester (A) layer contains particles which are inert particles having an average particle size of from 0.007 to 5 $\mu$m.

**6.** The polyester film according to claim 5, wherein an amount of the particles in polyester (A) layer is from 0.001 to 0.70 % by weight based on the polyester (A) layer.

7

**7.** The polyester film according to claim 1, wherein the number of coarse protuberances $n_3$ showing the interference fringes of the not less than third orders of the polyester (B) layer surface is at most 10 projections/10 cm$^2$.

**8.** The polyester film according to claim 1, wherein the polyester (B) layer contains carbon black particles having an average particle size of from 10 to 30 nm.

**9.** The polyester film according to claim 8, wherein an addition amount of the carbon black particles in the polyester (B) layer is at least 2.0 % by weight based on the layer.

**10.** The polyester film according to claim 8, wherein the polyester (B) layer contains titanium oxide particles in addition to carbon black particles.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | EP-A-0 523 596 (DIAFOIL HOECHST CO. LTD.) * page 2, line 41 - page 3, line 41; claims 1-7 * | 1-10 | G11B5/704 G11B5/64 |
| A | EP-A-0 238 985 (HOECHST A.G.) * claims 1-9 * | 1,5,6 | |
| A,D | PATENT ABSTRACTS OF JAPAN vol. 12, no. 258 (C-513)20 July 1988 & JP-A-63 043 931 ( DIAFOIL CO. LTD. ) 25 February 1988 * abstract * | 1,5,6, 8-10 | |
| | | | TECHNICAL FIELDS SEARCHED (Int. Cl.5 ) |
| | | | G11B |

The present search report has been drawn up for all claims

| Place of search | Date of completion of the search | Examiner |
|---|---|---|
| THE HAGUE | 27 JULY 1993 | VITZTHUM |

EPO FORM 1503 03.82 (P0401)